# EUROPÄISCHE PATENTSCHRIFT

(11) **EP 1 124 906 B1**
(45) Veröffentlichungstag und Bekanntmachung des Hinweises auf die Patenterteilung: **12.01.2005**
(21) Anmeldenummer: 99958027.7
(22) Anmeldetag: 12.11.1999
(51) Int. Cl.: C09D 5/00, C14C 11/00, D06M 15/00

(54) **WÄSSRIGE KOLLOIDALE DISPERSIONEN, ENTHALTEND KOMPLEXE VON POLYELEKTROLYTEN UND IONISCHEN FLUORIERTEN TENSIDEN, VERFAHREN ZU IHRER HERSTELLUNG, UND VERWENDUNG**
POLYELECTROLYTE AND FLUORINATED IONIC SURFACTANT COMPLEXES CONTAINING AQUEOUS COLLOIDAL DISPERSIONS; METHODS FOR THE PRODUCTION AND USE THEREOF
DISPERSIONS COLLOIDALES AQUEUSES CONTENANT DES COMPLEXES DE POLYELECTROLYTES ET DE TENSIOACTIFS IONIQUES FLUORES; PROCEDES PERMETTANT DE LES PREPARER ET LEUR UTILISATION

(30) Priorität: 14.11.1998 DE 19852584
(43) Veröffentlichungstag der Anmeldung: 22.08.2001
(73) Patentinhaber: Nanogate Coating Systems GmbH, 66121 Saarbrücken (DE)
(72) Erfinder: THÜNEMANN, Andreas, D-12207 Berlin (DE); LOCHHAAS, Kai, Helmut, D-65203 Wiesbaden (DE); PAULKE, Bernd-Reiner, D-14469 Potsdam-Eiche (DE); LIESKE, Antje, D-10317 Berlin (DE)
(74) Vertreter: von Kreisler Selting Werner
(86) Internationale Anmeldenummer: PCT/EP1999/008720
(87) Internationale Veröffentlichungsnummer: WO 2000/029489

(56) Entgegenhaltungen:
- EP-A- 0 587 988
- DE-A- 4 428 641
- US-A- 3 965 032

## Beschreibung

Die vorliegende Erfindung betrifft als Beschichtungsmittel geeignete wässrige kolloidale Dispersionen, Verfahren zu ihrer Herstellung, Verfahren zu ihrer Anwendung und die Verwendung der Dispersionen.

Für viele Anwendungen ist eine Oberflächenbeschichtung mit einer niedrigen Oberflächenenergie im Bereich der von Fluorpolymeren oder sogar darunter wünschenswert, die einfach nachträglich auf Oberflächen aufgebracht werden kann.

Antonietti et al. (Adv. Mater. 8 (1996), 41-45) und Lochhaas et al. (Polyelectrolyte-surfactant complexes with fluorinated surfactants: A new type of material for coatings, (3rd Conference in the Series: High Performance Coating Materials, Fluorine in Coatings II, 24-26. Februar 1997, München. Deutschland)) sowie Thünemann und Lochhaas (Langmuir 14 (1998), S. 4898-4903) beschreiben Komplexe aus Polyelektrolyten und zu den Polyionen entgegengesetzt geladenen ionischen fluorhaltigen Tensiden, die durch Fällung (grobdispers) aus wässriger Lösung erhalten werden. Als anionische Polyelektrolytkomponenten werden Polyacrylsäure, Polymethacrylsäure und als kationische Polyelektrolyte Poly-(diallyldimethylammoniumchlorid) offenbart. Diese Komplexe werden jedoch aus einer Lösung in fluorierten organischen Lösemitteln, z.B. Trifluorethanol, aufgebracht, so daß bei großflächiger Anwendung Alkoholdämpfe entstehen, die unter Umwelt- aber auch Sicherheitsaspekten ungünstig sind. Da die Komplexe durch Fällung aus einer wässrigen Lösung hergestellt werden, erscheint eine Verarbeitung aus wässriger Lösung nicht ohne weiteres möglich.

In der noch nicht veröffentlichten PCT-Anmeldung PCT/EP97/06173 werden Komplexe enthaltend einen nicht-hygroskopischen Polyelektrolyten und ein entgegengesetzt geladenes fluoriertes ionisches Tensid offenbart, die sich zur Herstellung von selbstorganisierenden Beschichtungen eignen. Die Komplexe werden grobdispers aus einer wässrigen Lösung gefällt, wobei die Fällung schon bei sehr niedrigen Konzentrationen unter 5 %(w/w) des Komplexes bezogen auf die Lösung auftritt; die Komplexe sind nicht wasserlöslich, so daß eine Verarbeitung aus Wasser heraus ausscheidet. Weiter werden Komplexe der gerade genannten Art, die weiter ein nichtionisches Tensid enthalten, sowie wässrige Emulsionen dieser Komplexe offenbart. Die nichtionische Tenside enthaltenden Komplexe werden z.B. dadurch erhalten, daß zunächst aus wässriger Lösung Komplexe enthaltend ein nicht-hygroskopischen Polyelektrolyten und ein entgegengesetzt geladenes fluoriertes ionisches Tensid gefällt, dann mit Tensid aufgenommen und in eine homogene Mischung überführt werden. Zur Herstellung der Emulsion werden sie schließlich, vorzugsweise portionsweise, mit Wasser versetzt. Die Verwendung von nichtionischen Tensiden führt jedoch zu einer Herabsetzung der Stabilität der Beschichtungen. Insbesondere bei Tensidanteilen von über 20%(w/w) am Komplex sind die mit dem Komplex hergestellten Beschichtungen nicht mehr langzeitstabil, sondern können mit einer Tensidlösung wieder abgewaschen werden. Weiterhin ist das Verfahren zur Herstellung der Komplexe relativ aufwendig.

Aufgabe der Erfindung ist es daher, eine wässrige Zusammensetzung zur Beschichtung von Oberflächen zur Herstellung niederenergetischer Oberflächen bereitzustellen.

Weitere Aufgabe der Erfindung ist es, ein Verfahren zur Herstellung der erfindungsgemäßen Zusammensetzung bereitzustellen.

Weitere Aufgabe der Erfindung ist es, ein Verfahren zur Herstellung der Beschichtung mit der erfindungsgemäßen Zusammensetzung bereitzustellen.

Schließlich ist es eine Aufgabe der Erfindung, Verwendungen für die erfindungsgemäße Zusammensetzung anzugeben.

Die erste Aufgabe wird gelöst durch eine wässrige kolloidale Dispersion mit Kolloidteilchen enthaltend Polyionen mindestens eines Polyelektrolyten und zur Ladung der Polyionen entgegengesetzt geladene Tensidionen mindestens eines ionischen fluorierten Tensids, wobei die Polyionen und wenigstens ein Teil der Tensidionen in den Kolloidteilchen enthaltene Komplexe bilden und die Stöchiometrie der Dispersion bezogen auf die Ladung des Polyions bzw. der Polyionen und des bzw. der Tensidionen zwischen 1:0,5 und 1: 1,5 ist.

Neben Wasser kann die flüssige Phase noch noch andere Bestandteile z.B. wie sie durch die Herstellung bedingt sein können, enthalten.

Überraschenderweise erlauben die erfindungsgemäßen wässrigen Zusammensetzungen durch Auftragen der Zusammensetzung auf eine Oberfläche und Trocknung die Bildung von selbstorganisierenden, sehr niederenergetischen, in der Regel daher auch stark wasser- und insbesondere ölabweisenden Oberflächenbeschichtungen aus einer wässrigen Zusammensetzung, ohne daß wesentliche chemische Reaktionen, d.h. Reaktionen mit Ausbildung kovalenter Bindungen zwischen den Bestandteilen der Zusammensetzung oder Bestandteilen der Zusammensetzung und der Oberfläche notwendig wären. Dies geschieht durch die Anreicherung von fluorierten organischen Gruppen an der Oberfläche der selbstorganisierenden Beschichtung. Überraschenderweise haftet die Beschichtung auch bei Tensidüberschuß und trotz ihrer niedrigen Oberflächenenergie gut an der Oberfläche. Weiter überraschend ist, daß eventuell herstellungsbedingt in der Dispersion enthaltene Salze die Ausbildung und die Eigenschaften der Beschichtung nicht beeinträchtigen.

Die erfindungsgemäßen kolloidalen Dispersionen sind auch über längere Zeiten lagerstabil.

Die erfindungsgemäße Zusammensetzung weist sehr gute Filmbildungseigenschaften auf, was wohl u.a. auf das Vorliegen von Dispersionsteilchen im kolloidalen Bereich zurückzuführen ist. Gegenüber in Flüssigkeiten gebrachten Pulvern, die die gleichen Komplexe, jedoch in deutlich größeren Teilchen enthalten, d.h. Suspensionen, weisen die Kolloidteilchen eine drastisch erhöhte spezifische Oberfläche und damit Oberflächenenergie auf, wodurch sich schnell Filme bilden, die verglichen mit solchen, die aus Komplexlösungen oder durch Aufbringen von Teilchen aus einer Lösung gebildet werden, wesentlich gleichmäßiger sind und auch über längere Zeiten gut haften.

Durch die Verwendung der erfindungsgemäßen Zusammensetzung, insbesondere mit hohen Wasseranteilen, läßt sich die Verwendung von organischen Lösemitteln zur Herstellung solcher Beschichtungen weitgehend reduzieren bzw. vermeiden, was die Umweltverträglichkeit wesentlich erhöht. Darüber hinaus führt die weitgehende Reduktion bzw. Vermeidung organischer Lösemittel auch zu einem stark erweiterten Anwendungsbereich bzw. zu Kosteneinsparungen, da bei industrieller Anwendung keine Explosionsgefahr durch abdampfende Lösemittelreste besteht und damit entsprechende Sicherheitsvorkehrungen entfallen können. Insbesondere stellt die Vermeidung der Verwendung von fluorierten Lösemitteln einen signifikanten Umwelt- und Kostenvorteil dar.

In der erfindungsgemäßen Zusammensetzung liegen die Komplexe nicht in flüssiger Form vor; vielmehr sind im allgemeinen in den Kolloidteilchen mehrere Komplexeinheiten enthalten, so daß Teilchen mit Feststoffcharakter gebildet werden. Hinweise auf den Feststoffcharakter ergeben sich aus DSC bzw. Röntgenstreuuntersuchungen.
Daher ist die erfindungsgemäße Zusammensetzung auch keine Emulsion im Sinne eines dispergierten Systems von zwei oder mehreren nicht miteinander mischbaren Flüssigkeiten. Des weiteren liegt somit auch kein, etwas ungenau ausgedrückt, emulgierter Komplex vor, der als Einzelkomplex versehen mit einem Emulgator bzw. Lösevermittler in Wasser zu verstehen ist.

In dieser Anmeldung werden unter Polyelektrolyten Polymere verstanden, die geladene Polyionen und dazu entgegengesetzt geladene Gegenionen aufweisen.
Die Stöchiometrie der Dispersion ist bezogen auf die Ladung des Polyions und des bzw. der Tensidionen zwischen 1:0,5 und 1: 1,5. Bevorzugt ist der Bereich zwischen 1:0,8 und 1:1,1, besonders bevorzugt zwischen 1:1 und 1:1,1 ganz besonders bevorzugt zwischen 1:1 und 1: 1,02, am meisten bevorzugt ist eine Stöchiometrie von 1:1. Dabei wird zur Angabe der Ladungen davon ausgegangen, daß sowohl das Polyion wie auch das Tensidion voll geladen (bzw. dissoziiert) sind.

In den in den Kolloidteilchen enthaltenen Komplexen aus Polyionen und fluorierten Tensidionen können höchstens der Ladung des Polyions entsprechend viele Tensidionen gebunden sein. Es ist davon auszugehen, daß überschüssige Tensidionen vermutlich als die Kolloidteilchen stabilisierendes Dispersionmittel wirken.

Die erfindungsgemäßen Dispersionen, insbesondere die mit einer Stöchiometrie von 1:1 sind zur Bildung besonders stabiler, gegen Waschen mit Tensiden nicht sehr empfindlicher Beschichtungen geeignet.

Die Kolloidteilchen in der Dispersion weisen bevorzugt mittlere Durchmesser zwischen 50 und 800 nm auf, wie sie z.B. mit Lichtstreuung bestimmt werden können.
Besonders bevorzugt sind Dispersionen, deren Kolloidteilchen einen mittleren Durchmesser zwischen 50 und 500 nm aufweisen. Ganz besonders bevorzugt sind erfindungsgemäße Dispersionen mit Teilchendurchmessern zwischen 50 und 300 nm. Durch diese Größen sind die erfindungsgemäßen Zusammensetzungen besonders stabil und ermöglichen eine sehr gute Filmbildung.

Bevorzugt sind die Kolloidteilchen monomodal. besonders bevorzugt monodispers verteilt, wodurch ebenfalls die Stabiltät der erfindungsgemäßen Zusammensetzung erhöht wird.

Die erfindungsgemäßen Dispersionen sind vorzugsweise homogen und besonders bevorzugt transparent.

Die Konzentration an Kolloidteilchen sollte kleiner als 15% (w/w) bezogen auf die Zusammensetzung sein, bevorzugt jedoch zwischen 0,01 und 12% (w/w) liegen, besonders bevorzugt zwischen 0,25% und 5 % (w/w).

Vorzugsweise weisen die Kolloidteilchen eine mesomorphe Struktur auf, die durch Röntgenkleinwinkelstreuung nachweisbar ist.

Die erfindungsgemäßen kolloidalen Dispersionen können noch die Cotenside, die gegebenenfalls zur Formulierung der zur Herstellung der Dispersion verwendeten Tenside benutzt wurden, enthalten. Vorzugsweise wirken diese aber nicht als eigentliche Stabilisatoren für die Kolloidteilchen.

Prinzipiell können die Komplexe der erfindungsgemäßen Zusammensetzung auf Polykationen in Kombination mit Anionen ionischer fluorierter Tenside oder Polyanionen in Kombination mit Kationen ionischer fluorierter Tenside basieren.

Als Polyelektrolyte sind prinzipiell alle Polyelektrolyte geeignet, wobei solche bevorzugt sind, die nicht stark hygroskopisch sind, da sie zu Beschichtungen führen, die nicht stark Wasser aufnehmen. Stark hygroskopische Polyelektrolyte sind z.B. Polyacrylsäure, Polymethacrylsäure und Poly-(diallyl-dimethylammoniumchlorid) und deren Salze. Bevorzugt sind daher ansonsten beliebige Kombinationen von Polyelektrolyten und fluorierten ionischen Tensiden. Die Polyelektrolyte sollten besonders bevorzugt derart sein, daß die gebildete Beschichtung eine geringe Wasseraufnahme von vorzugsweise maximal 20% (w/w), besonders bevorzugt maximal 10% (w/w) und am meisten bevorzugt maximal 5% (w/w) bezogen auf das Gewicht des Komplexes bei 20°C und 100% Luftfeuchtigkeit des Komplexes aufweist.

Prinzipiell können die erfindungsgemäßen kolloidalen Dispersionen auch Mischungen der Polyionen von Polyelektrolyten enthalten. bevorzugt entweder Mischungen von Polykationen oder Mischungen von Polyanionen.

Eine bevorzugte Klasse kationischer Polyelektrolyte sind Polymere, welche vorzugsweise mindestens 20% einer oder mehrerer der folgenden Monomereinheiten enthalten, mit der Maßgabe. daß der resultierende Polyelektrolyt nicht stark hygroskopisch im Sinne der vorliegenden Erfindung ist:
- Positiv geladene Stickstoffgruppen. z.B. quaternäre Ammoniumgruppen oder N-substituierte heteroaromatische Gruppen tragende ethylenisch ungesättigte Monomere entweder als Salze, wie sie durch Umsetzung basischer Aminofunktionen mit Mineralsäuren, z.B. Salzsäure, Schwefelsäure oder Salpetersäure, erhalten werden oder in quaternärer Form (z.B. durch Umsetzung mit Dialkylsulfaten wie etwa Dimethylsulfat, Diethylsulfat etc., Alkylchloriden wie etwa Methylchlorid, Ethylchlorid etc. oder Benzylchlorid) , z.B. Dimethylaminoethylacrylathydrochlorid, Diallyldimethylammoniumchlorid, Dimethylarninoethylacrylat-methosulfat, Dimethylaminopropylmethacrylamid-methochlorid,
   Dimethylaminopropylacrylamid-methochlorid, Dimethylaminopropylmethacrylamidmethosulfat, Dimethylaminopropylacrylamid-methosulfat, Vinylpyridiniumsalze oder 1 -Vinylimidazoliumsalze.

Gegebenenfalls kann der kationische Polyelektrolyt neben den kationischen Monomereinheiten auch ein oder mehrere nichtionische Monomereinheiten, z.B. bis zu 80 mol % enthalten. Die Anwesenheit nichtionischer Monomereinheiten ist in manchen Fällen, z.B. bei Poly(diallyl-dimethyl-ammoniumchlorid) zur Verringerung der Hygroskopizität erforderlich.

Beispiele für geeignete nichtionische Monomere sind
- C₁- bis C₂₀-Alkyl- und Hydroxylalkylester und insbesondere Amide und N-substituierte amide von monoethylenisch ungesättigten C₃- bis C₁₀- Monocarbonsäuren oder C₄- bis C₁₀-Dicarbonsäuren, z.B. Acrylamid, Methacrylamid, N-Alkylacrylamide oder N,N-Dialkylacrylamide mit jeweils 1 bis 18 C-Atomen in der Alkylgruppe wie N-Methylacrylamid, N,N-Dimethylacrylamid, N-tert.Butylacrylamid oder N-Octadecylacrylamid, Maleinsäuremonoethylhexylamid, Maleinsäuremonodecylamid, Dimethyl-aminopropylmethacrylamid, Dimethylaminopropylacrylamid oder Acrylamidoglykolsäure, weiterhin Alkylaminoalkyl(meth)acrylate, z.B. Dimethylaminoethylacrylat, Dimethylaminomethacrylat, Ethylaminoethylacrylat, Diethylaminoethylmethacrylat, weiterhin Vinylester, z.B. Vinylpyrrolidon, N-Vinylcaprolactam, N-Vinylformamid, N-Vinyl-N-methylformamid, 1-Vinylimidazol, 1-Vinyl-2-methylimidazol oder N-Methylvinylacetamid.

Ein Beispiel für kationische Polyelektrolyte, die aus kationischen und nichtionischen Monomereinheiten bestehen, ist wie folgt:
- Copolymere von Dialkenyl-dialkylammoniumsalzen, z.B. Diallyldimethylammonium-chlorid, mit nichtionischen Monomeren, z.B. N-Methyl-vinylacetamid, wobei der Anteil an nichtionischem Monomer vorzugsweise mindestens 20 mol% beträgt.

Weitere bevorzugte Klassen kationischer Polyelektrolyte sind:
- Polyethylenimine und alkylsubstituierte Polyethylenimine, z.B. Poly-(ethylenimin-co-N-docosylethylimin);
- Ionene, d.h. Polymere mit mehreren quaternären Ammoniumgruppen, die beispielsweise durch Umsetzung von di-tertiären Aminen mit α-, ω-Dihalogenalkenen entstehen, z.B. Ionen-6,3
- kationische Gruppen enthaltende Polysaccharide. insbesondere β- glykosidisch verknüpfte Polysaccharide, wie etwa Chitosan, und
- Polyvinylamine und Polyvinylamin-co-vinylformamid.

Die genannten Polyelektrolyte können in Basenform, teilweise neutralisiert oder vollständig neutralisiert zu Herstellung der erfindungsgemäßen Komplexe eingesetzt werden.

Darüber hinaus sind für die erfindungsgemäße Zusammensetzung auch die Polyionen anionischer Polyelektrolyte geeignet, die in Verbindung mit kationischen Tensiden verwendet werden.

Eine bevorzugte Klasse solcher anionischen Polyelektrolyte sind Polymere, welche vorzugsweise mindestens 20 mol% einer oder mehrerer der folgenden Monomereinheiten enthalten mit der Maßgabe, daß der resultierende Polyelektrolyt nicht stark hygroskopisch im Sinne der vorliegenden Erfindung ist:
- ethylenisch ungesättigte Carbonsäuren sowie Salze und Derivate davon, z.B. C₃- bis C₁₀-Monocarbonsäuren, deren Alkalimetall- oder/und Ammoniumsalze, beispielsweise Dimethylacrylsäure oder Ethylacrylsäure, C₄- bis C₁₀-Dicarbonsäuren, deren Halbester, Anhydride, Alkalimetallsalze oder/und Ammoniumsalze, z.B. Maleinsäure, Fumarsäure, Itaconsäure, Mesaconsäure, Methylmalonsäure, Citraconsäure, Maleinsäureanhydrid, Itaconsäureanhydrid oder Methylmalonsäureanhydrid;
- Sulfonsäuregruppen enthaltende ethylenisch ungesättigte Monomereinheiten, beispielsweise Allylsulfonsäure. Styrolsulfonsäure, Vinylsulfonsäure, Acrylsäure-3-sulfopropylester oder Methacrylsäure-3-sulfopropylester
- Phosphin-, Phosphon- oder Phosphorsäuregruppen enthaltende monoethylenisch ungesättigte Monomere, z.B. Vinylphosphonsäure, Allylphosphonsäure oder Acrylarnidomethylpropanphosphonsäure.

Gegebenenfalls können diese anionischen Polyelektrolyte ein oder mehrere der zuvor genannten nichtionischen Monomereinheiten, beispielsweise in einem Anteil von bis zu 80 mol% enthalten. Die Verwendung von Copolymeren aus anionischen und nichtionischen Monomereinheiten wird für einige der anionischen Monomereinheiten zur Verringerung der Hygroskopizität bevorzugt.

Eine weitere bevorzugte Klasse anionischer Polyelektrolyte sind anionische Gruppen enthaltende Polysaccharide.

Die anionischen Polyelektrolyte können in der Säureform, teilneutralisiert oder vollständig neutralisiert eingesetzt werden.

Ionische fluorierte Tenside sind Substanzen, die mindestens ein an ein Kohlenstoffatom gebundenes Fluoratom, vorzugsweise mindestens eine -CF₂- oder/und CF₃-Gruppe und mindestens einen Ladungsträger enthalten. Bevorzugt ist der Anteil der -CF₂- oder/und CF₃-Gruppe hoch.

In der Dispersion können selbstverständlich auch Mischungen der Ionen von ionischen fluorierten Tensiden, bevorzugt entweder Mischungen der Ionen kationischer fluorierter Tenside oder solche anionischer fluorierter Tenside verwendet werden.

Besonders bevorzugt sind , insbesondere für Dispersionen. die Kolloidteilchen mit einer Stöchiometrie von etwa 1: 1 aufweisen, heterodisperse Tenside, d.h. Mischungen von Tensiden mit gleicher Kopfgruppe aber unterschiedlichen Kettenlängen. Solche Dispersionen sind wesentlich stabiler als Dispersionen, die nur homodisperse ionische fluorierte Tenside enthalten.

Anionische fluorierte Tenside umfassen mindestens eine Fluor-enthaltende hydrophobe Gruppe und mindestens einen negativen Ladungsträger.

Beispiele solcher Verbindungen sind fluorierte Carbonsäuren sowie deren Salze mit anorganischen oder organischen Kationen, fluorierte Sulfonsäuren sowie deren Salze mit anorganischen oder organischen Kationen, fluorierte Organoschwefelsäuren sowie deren Salze mit anorganischen oder organischen Kationen, fluorierte Phosphin-, Phosphon- oder Organophosphorsäuren sowie deren Salze mit anorganischen oder organischen Kationen.

Bevorzugte dieser Verbindungsklassen sind wie folgt:
- Perfluorcarbonsäuren und deren vorzugsweise wasserlösliche Salze, wie etwa Perfluoralkansäuren, z.B. insbesondere Perfluoralkansäuren der Formel CF₃(CF₂)ₙ-COOH, wobei n vorzugsweise größer oder gleich 7 ist;
- teilfluorierte Carbonsäuren und Carbonsäuresalze. wie etwa teilfluorierte Alkansäuren. teilfluorierte Alkensäuren, Perfluoralkoxyalkansäuren, Perfluoralkylethylenoxyalkansäuren, Perfluoralkoxybenzoesäuren sowie Sulfid-, Sulfon-, Carbonsäureamid, Hydroxy-, Oxo- und/oder Ethergruppen enthaltende teilfluorierte carbonsäuren und Salze davon; z.B. Lithium-3-[(1H,1H,2H,2H-fluoralkyl)thio]-propionat, Zonyl FSA ®, Du Pont);
- Perfluorsulfonsäuren und deren vorzugsweise wasserlöslichen Salze, wie etwa Perfluoralkansulfonsäuren der Formel: CF₃(CF₂)ₘ -SO₃H mit m größer oder gleich 1;
- teilfluorierte Sulfonsäuren sowie deren vorzugsweise wasserlöslichen Salze, wie etwa teilfluorierte Alkansulfonsäuren, z.B. Perfluoralkylethansulfonsäuren, Perfluorpropylethansulfonsäuren, teilfluorierte Alkensulfonsäuren, sowie Sulfid-, Carbonsäureamid-, Hydroxy-, Oxo- oder/und Ethergruppen enthaltende teilfluorierte Sulfonsäuren, fluorierte Sulfoester, z.B. Sulfobernsteinsäureester, Perfluoralkylsulfopropionate, Perfluoralkylsulfobutyrate und Salze davon; z.B. Perfluoralkylethylsulfonsäure-Ammoniumsalz, Zonyl TBS ® Du Pont, Natrium-[bernsteinsäure-diperfluoralkylethyldiester-2-sulfonat], Fluowet SB ®, Clariant GmbH;
- fluorierte organische Schwefelsäuren und deren Salze wie etwa perfluoralkylierte Methylsulfate, fluorierte Sulfatopoly(oxyethylen), perfluorpropoxylierte Sulfate und Salze davon;
- fluorierte Phosphin- und Phosphonsäuren sowie deren vorzugsweise wasserlöslichen Salze, z.B. Fluowet PL80 ®, Hoe S 2746, Clariant GmbH;
- fluorierte organische Phophorsäuren und deren Salze, wie etwa Perfluoralkylethylphosphorsäuren, Mono- und Bis-(fluoralkyl-ethyl)-phosphorsäuren, Perfluoralkylphosphorsäuren, fluorierte Phosphatalkylester, z.B. Phophorsäureperfluoralkylesterammoniumsalz, Zonyl FSE ® und Zonyl FSP ®, Du Pont.

Komplexe mit anionischen Polyelektrolyten enthalten kationische Tenside.

Bevorzugte Klassen solcher Verbindungen sind:
- fluorierte Amine und Ammoniumsalze wie etwa Fluoralkylammoniumsalze, die gegebenenfalls Carbonsäureamid-, Sulfonsäureamid-, Sulfid-, Ester-, oder/und Hydroxy enthalten können, oder heterozyklische Stickstoffverbindungen, z.B. Perfluoralkenylethyltrialkylammonium-methosulfat, Hoe-L-3658-1, Clariant GmbH.

Weitere zweckmäßige ionische fluorierte Tenside sind im Buch von Erik Kissa (Fluorinated Surfactants, Surfactant Science Series Vol. 50, Marcel Dekker, Inc. New York, 1994) beschrieben.

Weiterhin kann die Zusammensetzung Mischungen von Kolloidteilchen enthalten, die bevorzugt entweder nur auf Polykationen oder nur auf Polyanionen basieren.

Die erfindungsgemäßen wässrigen kolloidalen Dispersionen lassen sich zudem überraschend einfach herstellen:

Die Aufgabe ein Verfahren zur Herstellung der erfindungsgemäßen Komplexe bereitzustellen, wird durch ein Verfahren gelöst, das die Schritte enthält:
Bildung einer homogenen Mischung eines oder mehrerer ionischer fluorierter Tenside mit Wasser, langsame Zugabe einer wässrigen Lösung des oder der Polyelektrolyten in die Mischung bei intensiver Vermischung.

Dabei werden die ionischen fluorierten Tenside und die Polyelektrolyte entsprechend der gewünschten Stöchiometrie der kolloidalen Dispersion eingebracht.

Das erfindungsgemäße Verfahren führt überraschenderweise zur Bildung von Kolloidteilchen, die Komplexe enthalten, die zur Bildung niederenergetischer Beschichtungen dienen. Ebenso überraschend ist, daß die wässrige kolloidale Dispersion sehr lagerstabil ist, obwohl bei gleichem Gewichtsanteil von Komplex Systeme mit größeren Teilchen instabil sind, wobei die größeren Teilchen sich schnell absetzen bzw. ausfallen. Darüber hinaus erlaubt das erfindungsgemäße Verfahren die Herstellung der wässrigen kolloidalen Dispersion aus den Edukten in nur einem Schritt, da ein im Fall von Suspensionen notwendiges separates Emulgieren eines zuvor in Wasser gefällten Pulvers entfällt.
Weiterhin überraschend beeinträchtigen die in einer nach diesem Verfahren hergestellten, erfindungsgemäßen kolloidalen Dispersion enthaltenen Gegenionen in den Ausgangsstoffen die Ausbildung und Eigenschaften einer mit der Dispersion gebildeten Beschichtung nicht oder nicht wesentlich.

Prinzipiell sind als Ausgangstoffe die oben genannten Polyelektrolyte sowie die oben genannten ionischen fluorierten Tenside geeignet.
Bevorzugt sollte der Polyelektrolyt so eingebracht werden, daß er in dem entstandenen Komplex eine möglichst hohe Ladung als Polyion ausbildet: das kann bei Verwendung von ionischen fluorierten Tensiden in Salzform z.B. dadurch erfolgen, daß die Polyelektrolytlösung wenigstens teilneutralisiert wird. Das bedeutet. daß z.B. bei Polykationen wie z.B. Polyethyleniminpolykationen, gegebenenfalls der pH-Wert z.B. mit Mineralsäuren wie z.B. HCl gesenkt werden sollte. Aufgrund der im erfindungsgemäßen Konzentrationsbereich relativ zum Ionenprodukt des Wassers nicht sehr großen Anzahl von Ladungen werden hierzu nur geringe Mengen an Mineralsäuren benötigt. Diese Maßnahme ist z.B. im Fall von Polykationen dann nicht notwendig, wenn die eingesetzten Tenside hinreichend starke Säuren sind. Analoges gilt für Polyanionen, die entsprechenden Maßnahmen sind dem Fachmann bekannt.

Wie oben erwähnt, können die Lösungen der ionischen fluorierten Tenside noch Cotenside enthalten, die z.B. das Lösungsverhalten der ionischen fluorierten Tenside in Wasser verbessern. Dies kann insbesondere bei höheren Konzentrationen des bzw. der ionischen Tenside bevorzugt sein. Bevorzugt werden Cotenside verwendet, die allein eine nur schwache oder, besonders bevorzugt keine, Tensidwirkung haben.

Die Verteilung der Tensidmoleküle muß möglichst homogen sein. Oberhalb der kritischen Micellenbildungskonzentration bilden sich bei entsprechender Behandlung Micellen, die jedoch möglichst klein sein sollten. Unter homogener Verteilung wird dann verstanden, daß sich nur kleine, gleichmäßig verteilte Micellen bilden. Die homogene Verteilung kann mit dem Fachmann bekannten Verfahren, wie z.B. Beschallen mit Ultraschall oder Scherung und Mischung in geeigneten Mischvorrichtungen wie z.B. mit Rührem, statischen oder dynamischen Mischern, d.h. Eintrag von hohen Scherenergien, erfolgen.

Die Konzentrationen der eingesetzten Tensid- und Polyelektrolytlösungen ergibt sich zum einen aus der gewünschten Endkonzentration der Dispersion. Um leicht eine möglichst homogene Verteilung der Tensidmoleküle erreichen zu können, wird daher vorteilhaft eine geringe Tensidkonzentration vorgelegt. Eine Obergrenze für die Konzentration der Polyelektrolytlösung ergibt sich aus der Löslichkeit des Polyelektrolyten und der Viskosität der Lösung, die so niedrig sein sollte, daß eine gute Einmischung noch möglich ist.

Bevorzugt, insbesondere zur Herstellung von erfindungsgemäßen kolloidalen Dispersionen mit einer Stöchiometrie von etwa 1:1, liegt das Verhältnis c_{P}/c_{T} der Konzentrationen der Polyionen der eingesetzten Polyelektrolytlösung c_{P} und der Tensidionen der eingesetzten Tensidlösung c_{T}, ausgedrückt durch die Äquivalentladung bezogen auf das Gewicht der jeweiligen Lösung unterhalb von 1,2, besonders bevorzugt unterhalb von 1,05, besonders bevorzugt unterhalb von 1.

Die Mischung kann durch dem Fachmann bekannte Verfahren wie Rühren oder die Verwendung statischer oder dynamischer Mischer erfolgen.

Die Zugabe erfolgt dabei so langsam, daß immer eine weitgehende bzw. ausreichende Durchmischung des Systems erfolgen kann. bevor durch starke Konzentrationsinhomogenitäten bzw. - gradienten die Gefahr eines Ausfallens von großen Komplexteilchen entsteht.

Das Verfahren kann prinzipiell bei jeder Temperatur durchgeführt werden, bei der die eingesetzten Lösungen nicht hochviskos bzw. fest werden oder verdampfen. Bevorzugt sind Temperaturen zwischen 10°C und 80°C, besonders bevorzugt Raumtemperatur bis 80 °C. Ganz besonders bevorzugt sind dabei gegenüber der Raumtemperatur erhöhte Temperaturen.

Die Aufgabe, Verfahren zur Beschichtung von Oberflächen mit der erfindungsgemäßen Zusammensetzung bereitzustellen, wird gelöst durch ein Verfahren, bei dem die erfindungsgemäße Zusammensetzung auf die zu beschichtende Oberfläche als flüssige Schicht aufgebracht wird und diese Schicht getrocknet wird.

Die erfindungsgemäß beschichteten Oberflächen weisen Oberflächenergien unter 20 mN/m, bestimmt mit der sessile-drop-Methode (Augsburg, A., Grundke, K., Pöschel, K., Jacobasch. H.-J., Neumann, A. W., Acta Polym. 1998, 49, 317) auf.

Die erfindungsgemäße Zusammensetzung kann durch Aufsprühen, Aufstreichen oder, soweit der zu beschichtende Gegenstand dies zuläßt, durch Tauchen in ein Bad auf die zu beschichtende Oberfläche aufgebracht werden.

Bei einem hohen Tensidanteil kann es angebracht sein, überschüssiges Tensid nach dem ersten Trocknen mit Wasser auszuwaschen.

Vorzugsweise wird bei einer Verwendung auf Flächen die erfindungsgemäß beschichtete Oberfläche unter nur leichtem Druck kurz poliert.

Die erfindungsgemäße kolloidale Dispersion eignet sich, insbesondere bei einer Stöchiometrie von 1:1, hervorragend zur Herstellung von Antihaftschichten, z.B. als Beschichtung gegen Verschmutzung durch Lacke oder Farben.

Die erfindungsgemäße kolloidale Dispersion eignet sich hervorragend zur Beschichtung von Fasern, insbesondere auch Textilien, und Leder. um eine wasser- und schmutzabweisende Wirkung zu erzielen.

Vorzugsweise erfolgt die Beschichtung mit erfindungsgemäßen Zusammensetzungen, die 0,1 bis 1,5 % an Komplex (w/w) enthalten.

Die erfindungsgemäße Zusammensetzung kann z.B. durch die verschiedenen, dem Fachmann bekannten Verfahren wie z.B. Sprühen bis zur vollständigen Benetzung oder Aufbringen in einem Vollbad erfolgen.

Die Trocknung erfolgt z.B. mit dem Fachmann bekannten im Textilbereich üblichen Verfahren.

Überraschenderweise wird die Hydrophobie auch ohne ein Auswaschen von Tensidresten und Salzen erreicht, was für Anwendungen insbesondere in Haushaltsanwendungen einen erheblichen Vorteil darstellt.

### Beispiele:

Die Erfindung wird nun an Hand von Ausführungsbeispielen näher erläutert. In den Beispielen wurden u.a. folgende Lösungen ionischer fluorierter Tenside verwendet:

Fluowet SB ® (Clariant GmbH, Frankfurt am Main), enthaltend 30 Gew.-% Natrium-[bernsteinsäure-diperfluoralkylethyl-diester-2-sulfonat], 28 Gew.-% Butylglykol und 44 Gew.-% Wasser (heterodisperses ionisches Tensid).

Hoe-S2746 (Clariant GmbH, Frankfurt am Main): 33 Gew.-% Perfluoralkylethylphosphat-Diethanolamin-Salz, 33 Gew.% Isopropanol, 34 Gew.-% Wasser (heterodisperses ionisches Tensid).

Fluowet PL80 ® (Clariant GmbH. Frankfurt a.M.) : 80 Gew.-% wässrige Lösung einer Mischung perfluorierter Phosphin-/Phosphonsäuren.

Soweit nicht anders angegeben wurden folgende Polyelektrolytlösungen verwendet:

**Tabelle 1**

| Wässrige Polyelektrolytlösung (Handelsname) | Polyelektrolyt |
|---|---|
| Lupasol P (50%ig) Mw=750000. BASF, Ludwigshafen | Polyethylenimin |
| Lupasol LU209 (94,1%ig) Mw=25000. BASF. Ludwigshafen | Polyethylenimin mit 10% EO alkoxyliert |
| Lupasol LU193 (98%ig) Mw=25000. BASF. Ludwigshafen | Polyethylenimin mit 80% EO alkoxyliert |
| Lupasol LU236 (98%ig) Mw=25000. BASF. Ludwigshafen | Polyethylenimin mit 80% BuO alkoxyliert |
| Lupasol SC61B (40%ig) Mw=750000. BASF. Ludwigshafen | Polyethylenimin mit 80% EO alkoxyliert - |
| Luviquat PQ11 (20%ig) Mw=1000000. BASF. Ludwigshafen | Poly-[vinylpyrrolidon-co-dimethylaminoethylmethacrylat]quat ** |
| Catiofast PR 8 117 Mw = 400000. BASF. Ludwigshafen | Polyvinylamin |

| | |
|---|---|
| Dabei bedeuten: EO: Ethylenoxid; BuO: Butylenoxid. DIMAPA: Dimethylaminopropylacrylamid, quat: quaternisiert mit *=Methylchlorid **=Diethylsulfat | |

### Beispiel 1: Herstellung einer Dispersion mit einem Komplex aus Polyethylenimin und Natrium-[bernsteinsäure-diperfluoralkylethyl-diester-2-sulfonat](Fluowet SB ®)

7,5 g Fluowet SB ® werdenmit destilliertem Wasser (Millipore) auf 500 ml verdünnt und 30 Minuten intensiv gerührt. Dabei ist eine Schaumbildung weitgehend zu vermeiden. Die so hergestellte Tensidlösung wird 10 Minuten mit Ultraschall behandelt. Eine Bestimmung der Tensidmicellendurchmesser mit Hilfe der Ultrazentrifugation ( bei 25 °C, mit Optima XL-1, Beckmann, Palo Alto, USA) ergibt einen mittleren Durchmesser von 10 nm. 90% aller Tensidmicellen sind kleiner als 13 nm. Anschließend werden innerhalb von 20 min 64,38 mg (1,5 mmol) Polyethylenimin (PEI)(Mw = 750.000 g/mol, Lupasol P, BASF, Ludwigshafen), gelöst in 87 ml Wasser, unter starkem Rühren bei Raumtemperatur zur Tensidlösung getropft. Dabei entsteht eine transparente homogene Komplexdispersion. Mit Hilfe dynamischer Lichtstreuung (Zetamaster S, Malvem, UK) wird ein mittlerer Teilchendurchmesser von 300 nm gemessen. Die so hergestellte Dispersion ist zur Beschichtung von Oberflächen gebrauchsfertig.

### Beispiel 2: Herstellung einer Dispersion mit einem Komplex aus Polyethylenimin und Natrium-[bernsteinsäure-diperfluoralkylethyl-diester-2-sulfonat] (Fluowet SB ®)

Es wird eine Polyethylenimin-Stammlösung folgendermaßen hergestellt: 7,4 g Polyethylenimin (Mn = 25.000 g/mol, Aldrich) werden in 90 ml Reinstwasser aufgenommen, mit 1 ml 0,1n Salzsäure angesäuert und mit Wasser auf 100 ml aufgefüllt. Aus der Stammlösung wird eine Polyethylenimin-Lösung durch Verdünnung von 1ml der Stammlösung auf 100 ml hergestellt.
Eine Tensidlösung wird folgendermaßen hergestellt: 1,5g Fluowet SB ® werden mit 90 ml Reinstwasser aufgenommen und mit Wasser auf 100 ml aufgefüllt. Durch Beschallen mit Ultraschall für 10 min wird das Tensid möglichst homogen in der Lösung verteilt.
Die Tensidlösung wird vorgelegt und bei Raumtemperatur werden 17,5 ml der Polyethylenimin-Lösung langsam unter Rühren zugetropft. Es entsteht eine stabile kolloidale Dispersion des Komplexes in Wasser. Die Teilchengrößen wurden wie oben bestimmt, das Z-Mittel lag bei 245 nm, die Polydispersität bei 0,31.

### Beispiel 3: Herstellung einer Dispersion mit einem Komplex aus Polyethylenimin und Natrium-[bernsteinsäure-diperfluoralkylethyl-diester-2-sulfonat] (Fluowet SB ®)

Es wird eine Polyethylenimin-Stammlösung folgendermaßen hergestellt: 7,4 g Polyethylenimin (Mw = 750.000 g/mol, Aldrich) werden in 100 ml VE-Wasser aufgenommen, und mit Wasser 1: 100 verdünnt.
Eine Tensidlösung wird folgendermaßen hergestellt: 1,5g Fluowet SB ® werden in 100ml VE-Wasser gelöst und 10 min mit Ultraschall behandelt.
Die Tensidlösung wird vorgelegt und bei Raumtemperatur werden 17,4 ml der verdünnten Polyethylenimin-Lösung langsam (10 Minuten) unter starkem Rühren (Magnetrührer) zugetropft. Es entsteht eine stabile kolloidale Dispersion des Komplexes in Wasser. Die Teilchengrößen wurden wie oben bestimmt, das Z-Mittel lag bei 178 nm, die Polydispersität bei 0,23. Die Oberflächenenergie von Beschichtungen auf Glas oder Aluminium bestimmt nach der Methoden von Zisman (Bernett, M.K., Zisman, W.A., J. Phys. Chem. 1962, 66, 1207) beträgt ca. 8 mN/m, bestimmt nach Girifalco (Girifalco, L.A. Good, R.J., J. Phys. Chem. 1957, 61, 904) 10 mN/m.

### Beispiel 4: Herstellung einer Dispersion mit einem Komplex aus Poly(acrylamidopropyltrimethylammoniumchlorid) und Natrium-[bernsteinsäure-diperfluoralkylethyl-diester-2-sulfonat] (Fluowet SB ®)

Ein micellare Lösung aus 1,5g Fluowet SB ® in 100 ml Wasser wird analog zu obigem Beispiel hergestellt. Zu dieser Lösung wird unter intensivem Rühren bei Raumtemperatur 15 ml einer 0,41 Gew.-% wässrigen Lösung von Poly(acrylamidopropyltrimethylammoniumchlorid) (Mn = 100.000 g/mol), Fa. Stockhausen, Krefeld) zugetropft. Es entsteht eine transparente Komplexdispcrsion. Der mit Hilfe der dynamischen Lichtstreuung (Zetamaster S, Malvern, UK) gemessene mittlere Teilchendurchmesser (Z-Mittel) beträgt ca. 320 nm, die Polydispersität 0,34. Die so hergestellte Dispersion ist zur Beschichtung von Oberflächen gebrauchsfertig.

### Beispiel 5: Herstellung einer Dispersion mit einem Komplex aus Polyethylenimin und Lithium-3-[(1H,1H,2H,2H-fluoralkyl)thio]-propionat (Zonyl FSA ®, DuPont)

1g einer wässrigen 25 Gew.-% Lösung von Zonyl FSA werden in 100ml Wasser gemischt und 10 min mit Ultraschall behandelt.
7,4 g Polyethylenimin (Mw 750.000g/mol) werden in 100ml Wasser gelöst; diese Lösung wird 1:100 mit VE-Wasser verdünnt.
17,4 ml der verdünnten Polyethylenimin-Lösung werden langsam (10 Minuten) unter starkem Rühren der Tensidlösung zugetropft.
Es entsteht eine Dispersion mit einem mittleren mit deoben genannten Verfahren bestimmten Teilchendurchmesser von 87 nm (Z-Mittel) und einer Polydispersität von 0,23.

### Beispiel 6: Herstellung einer Dispersion mit einem Komplex aus Polyethylenimin und Fluorad FC 129

1,2 g einer 30 Gew.-% Lösung von Fluorad FC 129 (enthaltend Perfluoralkyl-Carboxylate als Salz, 3M Deutschland) werden in 100ml Wasser gelöst und 10 min mit Ultraschall behandelt. 7,4 g Polyethylenimin (Mw 750.000g/mol) werden in 100ml Wasser gelöst; diese Lössung wird 1:100 mit VE-Wasser verdünnt.
17,4 ml der verdünnten Polyethylenimin-Lösung werden langsam unter starkem Rühren der Tensidlösung zugetropft.
Es entsteht eine Dispersion mit einem mittleren mit dem oben genannten Verfahren bestimmten Teilchendurchmesser von 125 nm (Z-Mittel) und einer Polydispersität von 0,43.

### Beispiel 7: Herstellung einer Dispersion mit einem Komplex aus Lupasol LU209 und Natrium-[bernsteinsäure-diperfluoralkylethyl-diester-2-sulfonat] (Fluowet SB ®)

Es wird eine Lupasol-Stammlösung folgendermaßen hergestellt: 7,4 g Lupasol LU209 der Fa. BASF (Poly(ethylenimin-co-N-hydroxyethylethylenimin) mit einem Monomeranteil von 90% Ethylenimin und 10 % N-Hydroxyethylethylenimin) werden in 90 ml Reinstwasser aufgenommen, mit 1 ml 0,1 n Salzsäure angesäuert und mit Wasser auf 100 ml aufgefüllt. Aus der Stammlösung wird eine Polyethylenimin-Lösung durch Verdünnung von 1ml der Stammlösung auf 100 ml.
Eine Tensidlösung wird folgendermaßen hergestellt: 1,5 g einer 30 Gew.-% Lösung von Sulfobernsteinsäurediethyldiperfluoralkyl-ester als Na-Salz (Fluowet SB ®, Clariant GmbH, Frankfurt a.M.) werden mit 90 ml Reinstwasser aufgenommen und mit Wasser auf 100 ml aufgefüllt. Durch Beschallen mit Ultraschall für 10 min wird das Tensid möglichst homogen in der Lösung verteilt.

Die Tensidlösung wird vorgelegt und bei Raumtemperatur werden 19,3 ml der Polyethylenimin-Lösung langsam unter Rühren zugetropft. Es entsteht eine stabile kolloidale Dispersion des Komplexes in Wasser. Die Teilchengrößen wurden wie oben bestimmt, das Z-Mittel lag bei 270 nm, die Polydispersität bei 0,39.

### Beispiele 8 bis 13:

In den Beispielen 8 bis 13 (s. Tabelle 2) werden verschiedene Beispiele einer erfindungsgemäßen wässrigen kolloidalen Dispersion mit einem Gewichtsanteil von 10% der Kolloidteilchen und einer Stöchiometrie von 1:1 im Sinne der Erfindung hergestellt. Dazu werden zu den Polyelektrolytlösungen und den Tensidlösungen jeweils die angegebenen Mengen an E-Wasser (entionisiertes Wasser) entsprechend Tabelle 2 zugegeben und gut vermischt. Die zuvor sehr gut durchgerührte verdünnte Tensidlösung wird vorgelegt und unter Rühren wird langsam die verdünnte Polyelektrolytlösung zugetropft (ca. 2 Tropfen pro Sekunde). In Beispiel 14 wurde der pH so eingestellt. daß der pH-Wert der entstehenden Dispersion 8 ist. Es entsteht jeweils eine transparente kolloidale Dispersion.

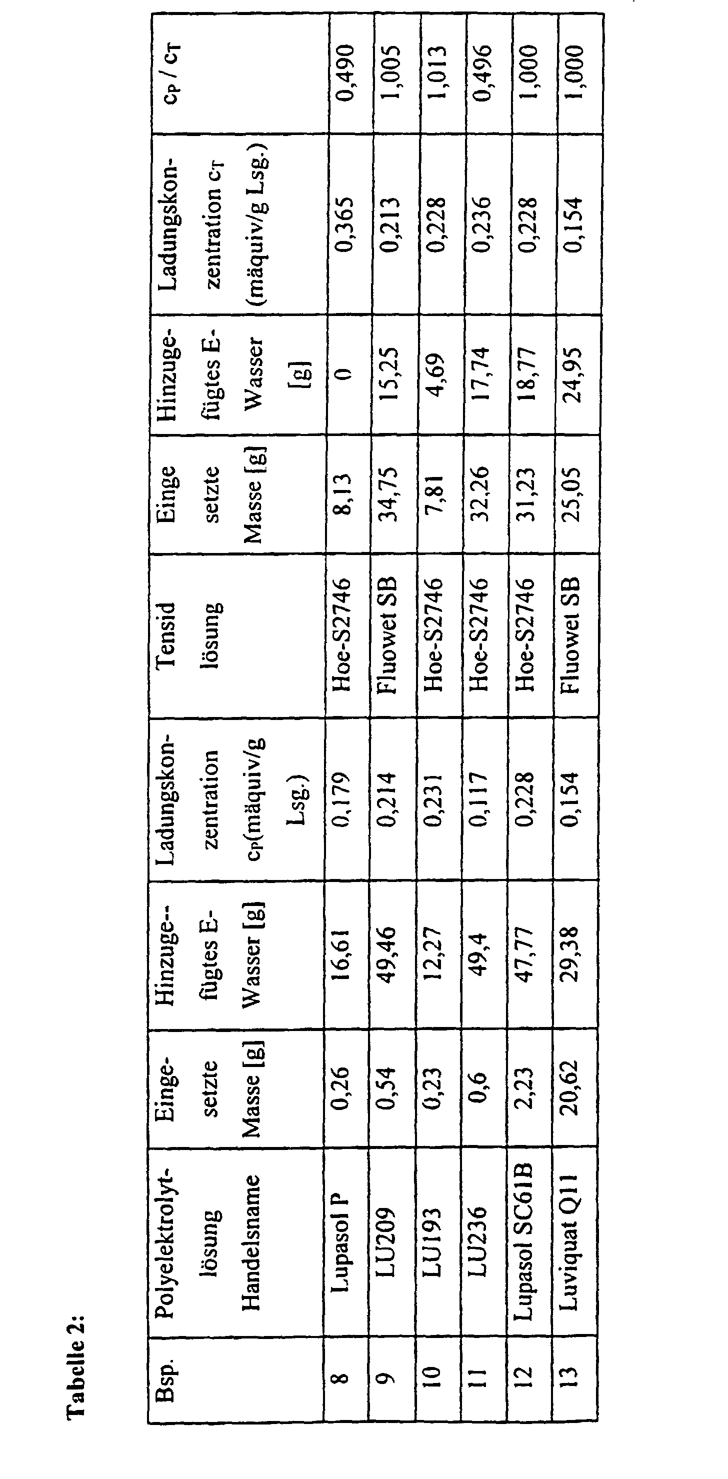

### Beispiel 14: Herstellung einer wässrigen kolloidalen Dispersion mit einer Mischung von ionischen fluorierten Tensiden

Aus 13,17 g Zonyl FSP (35 Gew. % wässrige Lösung von Phophorsäureperfluoralkylesterammoniumsalzen, DuPont) und 15,62g Hoe-S2746 (Clariant GmbH, Frankfurt am Main) wurden gemischt, mit VE-Wasser auf 50g Lösung aufgefüllt, und ca. 10 min mit Ultraschall behandelt. 2,36 g Lupasol SC61B wurden auf 50g mit VE-Wasser aufgefüllt. Die Tensidlösung wird vorgelegt und unter Rühren wird langsam die verdünnte Polyelektrolytlösung zugetropft. Es entsteht jeweils eine transparente kolloidale Dispersion.

### Beispiel 15: Beschichtung eines lackierten Autoblechs mit einer Dispersion mit einem Komplex aus Polyethylenimin und Natrium-[bernsteinsäure-diperfluoralkylethyldiester-2-sulfonat] (Fluowet SB ®)

2,0 ml einer 0,32 Gew.% Dispersion mit Komplexen aus Polyethylenimin und Fluowet SB (s. Beispiel 1) werden mit einer Air-Brush-Pistole gleichmäßig auf eine 100 x 100 mm großes lackiertes Autoblech aufgetragen, das auf 50°C vorgewärmt wurde. Eine anschließende Trocknung der aufgetragenen Dispersion erfolgt bei 70°C im Luftstrom für 30 Minuten. Zur Entfernung von überschüssigem Tensid wird das Blech 5 Minuten unter fließendem Wasser gewaschen und abermals 30 Minuten bei 70°C im Luftstrom getrocknet. Abschließend wird das Blech mit einem weichen Tuch poliert. Nach diesem Verfahren hat sich auf dem Blech eine Komplex-Schicht von ca. 400 nm Dicke (bestimmt mit dem Alpha Step-Verfahren, d.h. mit dem surface profiler, Dektak 3ST, Vecco Instruments) ausgebildet, die den optischen Eindruck des lackierten Blechs nicht oder nur unwesentlich verändert, aber stark erniedrigte Oberflächenenergien gegenüber dem unbehandelten Blech aufweist.

### Beispiel 16:

Es wurden 7 verschiedene wässrige kolloidale Dispersionen hergestellt. Dazu wurde aus einer Menge m_{T} durch Zugabe von entsalztem Wasser 50 g und sehr gutes Verrühren eine homogene verdünnte Tensidlösung hergestellt. Aus einer Menge m_{P} Polyelektrolytlösung wurde durch Zugabe von entsalztem Wasser 50 g einer verdünnten Polyelektrolytlösung hergestellt. Die verdünnte Tensidlösung wurde vorgelegt und unter ständigem Rühren wurde die verdünnte Polyelektrolytlösung langsam zugetropft. Es entstand jeweils eine transparente wässrige kolloidale Dispersion. Die einzelnen Einsatzmengen sind der folgenden Tabelle zu entnehmen:

| Beschichtungsmaterial | Tensid | m_{T} [g] | Polyelektrolyt | mp [g] |
|---|---|---|---|---|
| A | Zonyl FSP | 4.14 | Lupasol P | 0,12 |
| B | Fluowet PL80 | 2.33 | Lupasol WF (BASF) | 0.22 |
| C | HoeS2746 | 8.06 | Lupasol LU236 | 0,15 |
| D | Zonyl FSA | 5.31 | Luviquat PQ11 | 7,77 |
| E | Zonyl FSP | 4.71 | Luviquat PQ11 | 6,03 |
| F | HoeS2746 | 5,65 | Luviquat PQ11 | 5,55 |
| G | HoeS2746 | 8.13 | Lupasol P | 0,26 |

Verschiedene repräsentative Textil- und Lederproben wurden mit wässerigen Dispersionen des erfindungsgemäßen Materials beschichtet. Es wurden 1%ige Dispersionen hergestellt und die Beschichtung sowohl im Sprühvorgang bis zur vollständigen Benetzung des Substrates als auch vollbadig vorgenommen. Hinsichtlich des Resultates konnte kein Unterschied zwischen den beiden Beschichtungsverfahren festgestellt werden. Die Proben wurden bei Raumtemperatur getrocknet, Trocknungszeit entsprechend der Wasserverdampfung abhängig von der Dicke und dem Gewicht des Substrates 1 bis 12 Stunden, vorzugsweise 1 bis 4 Stunden.

Hydrophobie und Oleophobie der Textil- und Lederproben wurden durch Bestimmung der Tropfeneinsinkzeiten quantifiziert. Dazu wurden Benetzungsuntersuchungen nach TEGEWA durchgeführt: 50µl große Tropfen von einer polaren und einer unpolaren Testsubstanz wurden auf die Textil- und Lederproben aufgebracht und die Zeit nach TEGEWA gemessen, bis die Tropfen in dem Gewebe versunken waren (Siehe D. Knittel, E. Schollmeyer, Melliand Textilbericht 5/1998). Als Testsubstanzen wurde Wasser und Hexadecan gewählt. Die Ergebnisse sind in der folgenden Tabelle dargestellt.

| Substrat | Beschichtungs- material | Tropfeneinsinkzeit (50µl) in Stunden | |
|---|---|---|---|
| | | Wasser | Hexadecan |
| Baumwolle | Lupasol P-Zonyl FSP (A) | 2 h | Sinkt über 4 Tage nicht ein |
| Baumwolle | Lupasol WF - Fluowet PL80 (B) | 0,5 h | Sinkt über 4 Tage nicht ein |
| Baumwolle | Lupasol LU236 - HOE S2746 (C) | 2,5 h | Sinkt über 4 Tage nicht ein |
| Baumwolle | Luviquat PQ11 - Zonyl FSA (D) | 2,5 h | Sinkt über 2 Tage nicht ein |
| Baumwolle | Luviquat PQ 11 - Zonyl FSP (E) | 3,5h | Sinkt über 2 Tage nicht ein |
| Baumwolle | Luviquat PQ11 - HOE S2746 (F) | 3,5 h | Sinkt über 2 Tage nicht ein |
| Baumwolle/Polyester Mischgewebe 50:50 | Lupasol P - HOE S2746 (G) | 1,5 h | Sinkt über 4 Tage nicht ein |
| Baumwolle/Polyester Mischgewebe 50:50 | Lupasol WF - Fluowet PL80 (B) | 2,5 h | Sinkt über 2 Tage nicht ein |
| Baumwolle/Polyester Mischgewebe 50:50 | Lupasol P - Zonyl FSP (A) | 2 h | Sinkt über 2 Tage nicht ein |
| Baumwolle/Polyester Mischgewebe 50:50 | Luviquat PQ 11 - Zonyl FSA (D) | 2,5 h | Sinkt über 2 Tage nicht ein |
| Baumwolle/Polyester Mischgewebe 50:50 | Luviquat PQ11 - Zonyl FSP (A) | 1,5 h | Sinkt über 2 Tage nicht ein |
| Baumwolle/Polyester Mischgewebe 50:50 | Luviquat PQ11 - HOE S2746 (F) | 1,5 h | Sinkt über 2 Tage nicht ein |
| Polyamid (Teppichflor) | Lupasol P - Zonyl FSP (A) | 3 h | Sinkt über 4 Tage nicht ein |
| Leder, nicht vorbehandelt, glatt | Lupasol P - Zonyl FSP (A) | 3 h | 6 Stunden |
| Wildleder gefärbt | Lupasol P - Zonyl FSP (A) | 2 h | Sinkt sofort ein |
| Fettleder | Lupasol P - Zonyl FSP (A) | 2 h | 1 Stunde |

### Beispiel 17: Herstellung einer Dispersion mit einem Komplex aus Polyvinylamin und Ammoniumperfluoralkylethylphosphat (Zonyl FSP ®, DuPont)

20,94 g einer wäßrigen 35 Gew. % Lösung von Zonyl FSP werden mit 29,1 ml destilliertem Wasser gemischt und 10 min mit Ultraschall behandelt. 2.84 g Polyvinylamin (M_{w} 400000 g/mol) werden in 47,2 ml destilliertem Wasser gelöst und mit Salzsäure auf einen pH-Wert von 6 bis 7 eingestellt. Die Polyvinylamin-Lösung wird langsam (10 Minuten) unter starkem Rühren der Tensidlösung zugetropft. Es entsteht eine feinteilige, gelbliche Dispersion.

## Patentansprüche

1. Wässrige kolloidale Dispersion enthaltend Polyionen mindestens eines Polyelektrolyten und zur Ladung der Polyionen entgegengesetzt geladene Tensidionen mindestens eines ionischen fluorierten Tensids, wobei die Polyionen und wenigstens ein Teil der Tensidionen in den Kolloidteilchen enthaltene Komplexe bilden und die Stöchiometrie der Dispersion bezogen auf die Ladung des Polyions bzw. der Polyionen und des bzw. der Tensidionen zwischen 1:0,5 und 1: 1,5 ist.

2. Wässrige kolloidale Dispersion nach Anspruch 1, **dadurch gekennzeichnet, daß** die Stöchiometrie der Dispersion bezogen auf die Ladung des Polyions und des bzw. der Tensidionen zwischen 1:0,8 und 1: 1,1 ist.

3. Wässrige kolloidale Dispersion nach Anspruch 2, **dadurch gekennzeichnet, daß** die Stöchiometrie der Dispersion bezogen auf die Ladung des Polyions und des bzw. der Tensidionen zwischen 1:1 und 1: 1,1 ist.

4. Wässrige kolloidale Dispersion nach Anspruch 1, **dadurch gekennzeichnet, daß** die Stöchiometrie der Dispersion bezogen auf die Ladung des Polyions und des bzw. der Tensidionen zwischen 1: 1 und 1: 1,02 ist.

5. Wässrige kolloidale Dispersion nach einem der Ansprüche 1 bis 4, **dadurch gekennzeichnet, daß** die mittlere Dispersionsteilchengröße im Bereich von 50 nm bis 800 nm liegt.

6. Wässrige kolloidale Dispersion nach Anspruch 5, **dadurch gekennzeichnet, daß** die mittlere Dispersionsteilchengröße im Bereich von 50 nm bis 500 nm liegt.

7. Wässrige kolloidale Dispersion nach einem der vorhergehenden Ansprüche, **dadurch gekennzeichnet, daß** die Kolloidteilchen eine mesomorphe Struktur aufweisen.

8. Wässrige kolloidale Dispersion nach einem der vorhergehenden Ansprüche, **dadurch gekennzeichnet, daß** der Gewichtsanteil der Kolloidteilchen an der Dispersion im Bereich von 0,01 bis 15% liegt.

9. Wässrige kolloidale Dispersion nach Anspruch 8, **dadurch gekennzeichnet, daß** der Gewichtsanteil der Kolloidteilchen an der Dispersion im Bereich von 0,25 bis 10% liegt.

10. Wässrige kolloidale Dispersion nach einem der vorhergehenden Ansprüche, **dadurch gekennzeichnet, daß** die Kolloidteilchen Polyionen von mindestens zwei verschiedenen Polyelektrolyten enthalten.

11. Wässrige kolloidale Dispersion nach einem der Ansprüche 1 bis 10, **dadurch gekennzeichnet, daß** sie mindestens ein zweites ionisches fluoriertes Tensid enthält.

12. Wässrige kolloidale Dispersion nach einem der Ansprüche 1 bis 11, **dadurch gekennzeichnet, daß** mindestens eines der ionischen fluorierten Tenside heterodispers ist.

13. Wässrige kolloidale Dispersion nach einem der Ansprüche 1 bis 12, **dadurch gekennzeichnet, daß** die Polyionen Polykationen und die Tensidionen Anionen sind.

14. Wässrige kolloidale Dispersion nach einem der Ansprüche 1 bis 12, **dadurch gekennzeichnet, daß** die Polyionen Polyanionen und die Tensidionen Kationen sind.

15. Wässrige kolloidale Dispersion nach Anspruch 13, **dadurch gekennzeichnet, daß** der kationische Polyelektrolyt oder die kationischen Polyelektrolyte ausgewählt sind aus der Gruppe bestehend aus:
- Polymeren, die mindesten eine Monomereinheit ausgewählt aus Stickstoffgruppen tragenden ethylenisch ungesättigten Monomeren enthalten,
- Polyethylenimin und alkylsubstituierten Polyethyleniminen;
- lonenen und
- kationischen Gruppen enthaltende Polysacchariden.

16. Wässrige kolloidale Dispersion nach Anspruch 13, **dadurch gekennzeichnet,**
**daß** der kationische Polyelektrolyt oder die kationischen Polyelektrolyte mindestens eine Monomereinheit enthält, die eine quaternäre Ammoniumgruppe oder eine N-substituierte heteroaromatische Gruppe trägt.

17. Wässrige kolloidale Dispersion nach Anspruch 14 oder 15, **dadurch gekennzeichnet, daß** der kationische Polyelektrolyt weiterhin nichtionische Monomereinheiten enthält.

18. Wässrige kolloidale Dispersion nach einem der Ansprüche 15 oder 17, **dadurch gekennzeichnet, daß** der Polyelektrolyt ein Copolymer von Dialkenyldialkyl-ammoniumsalzen und nichtionischen Monomeren enthält.

19. Wässrige kolloidale Dispersion nach Anspruch 14, **dadurch gekennzeichnet, daß** der anionische Polyelektrolyt ausgewählt ist aus der Gruppe bestehend aus
- Polymeren, die mindestens eine Monomereinheit enthalten, ausgewählt aus ethylenisch ungesättigten Carbonsäuren sowie Salzen und Derivaten davon, Sulfonsäuregruppen enthaltende ethylenisch ungesättigten Monomereinheiten, Phosphin-, Phosphon- oder Phosphorsäuregruppen enthaltenden ethylensich ungesättigten Monomereinheiten und
- anionischen Polysacchariden.

20. Wässrige kolloidale Dispersion nach Anspruch 19, **dadurch gekennzeichnet, daß** der anionische Polyelektrolyt weiterhin nichtionische Monomereinheiten enthält.

21. Wässrige kolloidale Dispersion nach einem der Ansprüche 13, oder 15 bis 18, **dadurch gekennzeichnet, daß** mindestens eines der anionischen fluorierten Tenside ausgewählt ist aus der Gruppe bestehend aus:
- fluorierten Carbonsäuren,
- fluorierten Sulfonsäuren,
- fluorierten Organoschwefelsäuren,
- fluorierten Phosphin-, Phosphon- und Organophosphorsäuren sowie
- anionischen Derivaten oder Salzen davon.

22. Wässrige kolloidale Dispersion nach Anspruch 21, **dadurch gekennzeichnet, daß** das anionische fluorierte Tensid ausgewählt ist aus der Gruppe bestehend aus:
- Perfluorcarbonsäuren und deren Salzen
- Perfluorsulfonsäuren und deren Salzen
- fluorierten Estern davon.

23. Wässrige kolloidale Dispersion einem der Ansprüche 14, 19 oder 20, **dadurch gekennzeichnet, daß** mindestens eines der kationischen fluorierten Tenside ausgewählt ist aus fluorierten Aminen und Salzen davon.

24. Verfahren zur Herstellung einer wässrigen kolloidalen Dispersion nach einem der Ansprüche 1 bis 23, das die Schritte enthält:
Bildung einer homogenen Mischung eines oder mehrerer ionischer fluorierter Tenside in Wasser und
langsame Zugabe einer wässrigen Lösung des oder der Polyelektrolyten in die Mischung bei intensiver Vermischung.

25. Verfahren nach Anspruch 24, **dadurch gekennzeichnet, daß** der pH-Wert der Polyelektrolytlösung so eingestellt ist, daß der Polyelektrolyt in der Lösung wenigstens teilneutralisiert vorliegt.

26. Verfahren nach Anspruch 24 oder 25, **dadurch gekennzeichnet, daß** das Verhältnis c_{P}/c_{T} der Äquivalentladungskonzentration der Polyionen in der eingesetzten Polyelektrolytlösung c_{P} zu der der Tensidionen in der eingesetzten Tensidlösung, c_{T}, kleiner als 1,2 ist.

27. Verfahren nach Anspruch 26, **dadurch gekennzeichnet, daß** das Verhältnis der Äquivalentladungskonzentration der Polyionen in der eingesetzten Polyelektrolytlösung zu der der Tensidionen in der eingesetzten Tensidlösung kleiner als 1,05 ist.

28. Verfahren nach Anspruch 26, **dadurch gekennzeichnet, daß** das Verhältnis der Äquivalentladungskonzentration der Polyionen in der eingesetzten Polyelektrolytlösung zu der der Tensidionen in der eingesetzten Tensidlösung kleiner als 1 ist.

29. Beschichtungsverfahren, bei dem eine wässrige kolloidale Dispersion nach einem der Ansprüche 1 bis 23, auf die zu beschichtende Oberfläche aufgetragen und getrocknet wird.

30. Beschichtungsverfahren nach Anspruch 29, bei dem nach dem Antrocknen der Beschichtung, diese nochmals mit Wasser abgewaschen wird.

31. Verwendung einer wässrigen kolloidalen Dispersion nach einem der Ansprüche 1 bis 23 zur Beschichtung von Oberflächen.

32. Verwendung einer wässrigen kolloidalen Dispersion nach einem der Ansprüche 1 bis 23 zur Beschichtung von Fasern oder Textilien.

33. Verwendung einer wässrigen kolloidalen Dispersion nach einem der Ansprüche 1 bis 23 zur Beschichtung von Leder.

34. Verwendung einer wässrigen kolloidalen Dispersion nach einem der Ansprüche 1 bis 23 zur Herstellung einer die Gleitfähigkeit verbessernden Beschichtung

## Claims

1. An aqueous colloidal dispersion containing polyions of at least one polyelectrolyte and surfactant ions of at least one ionic fluorinated surfactant having a charge opposite to that of the polyions, wherein said polyions and at least part of the surfactant ions form complexes contained in the colloid particles, and the stoichiometry of the dispersion, based on the charges of the polyion or polyions and surfactant ion or ions, is between 1:0.5 and 1:1.5.

2. The aqueous colloidal dispersion according to claim 1, **characterized in that** the stoichiometry of the dispersion, based on the charges of the polyion and surfactant ion or ions, is between 1:0.8 and 1:1.1.

3. The aqueous colloidal dispersion according to claim 2, **characterized in that** the stoichiometry of the dispersion, based on the charges of the polyion and surfactant ion or ions, is between 1:1 and 1:1.1.

4. The aqueous colloidal dispersion according to claim 1, **characterized in that** the stoichiometry of the dispersion, based on the charges of the polyion and surfactant ion or ions, is between 1:1 and 1:1.02.

5. The aqueous colloidal dispersion according to any of claims 1 to 4, **characterized in that** the average size of the dispersion particles is within a range of from 50 nm to 800 nm.

6. The aqueous colloidal dispersion according to claim 5, **characterized in that** the average size of the dispersion particles is within a range of from 50 nm to 500 nm.

7. The aqueous colloidal dispersion according to any of the preceding claims, **characterized in that** the colloid particles have a mesomorphic structure.

8. The aqueous colloidal dispersion according to any of the preceding claims, **characterized in that** the weight proportion of the colloid particles in the dispersion is within a range of from 0.01 to 15%.

9. The aqueous colloidal dispersion according to claim 8, **characterized in that** the weight proportion of the colloid particles in the dispersion is within a range of from 0.25 to 10%.

10. The aqueous colloidal dispersion according to any of the preceding claims, **characterized in that** the colloid particles contain polyions of at least two different polyelectrolytes.

11. The aqueous colloidal dispersion according to any of claims 1 to 10, **characterized by** containing at least a second ionic fluorinated surfactant.

12. The aqueous colloidal dispersion according to any of claims 1 to 11, **characterized in that** at least one of said ionic fluorinated surfactants is heterodisperse.

13. The aqueous colloidal dispersion according to any of claims 1 to 12, **characterized in that** the polyions are polycations and the surfactant ions are anions.

14. The aqueous colloidal dispersion according to any of claims 1 to 12, **characterized in that** the polyions are polyanions and the surfactant ions are cations.

15. The aqueous colloidal dispersion according to claim 13, **characterized in that** the cationic polyelectrolyte or polyelectrolytes are selected from the group consisting of:
- polymers which contain at least one monomeric unit selected from ethylenically unsaturated monomers bearing nitrogen groups;
- polyethyleneimine and alkyl-substituted polyethyleneimines;
- ionenes; and
- polysaccharides containing cationic groups.

16. The aqueous colloidal dispersion according to claim 13, **characterized in that** the cationic polyelectrolyte or polyelectrolytes contain at least one monomeric unit which bears a quaternary ammonium group or an N-substituted heteroaromatic group.

17. The aqueous colloidal dispersion according to claim 14 or 15, **characterized in that** the cationic polyelectrolyte further contains non-ionic monomeric units.

18. The aqueous colloidal dispersion according to any of claims 15 or 17, **characterized in that** the polyelectrolyte contains a copolymer of dialkenyldialkylammonium salts and non-ionic monomers.

19. The aqueous colloidal dispersion according to claim 14, **characterized in that** the anionic polyelectrolyte is selected from the group consisting of:
- polymers which contain at least one monomeric unit selected from ethylenically unsaturated carboxylic acids as well as salts and derivatives thereof, ethylenically unsaturated monomeric units containing sulfonic acid groups, ethylenically unsaturated monomeric units containing phosphinic, phosphonic or phosphoric acid groups; and
- anionic polysaccharides.

20. The aqueous colloidal dispersion according to claim 19, **characterized in that** the anionic polyelectrolyte further contains non-ionic monomeric units.

21. The aqueous colloidal dispersion according to any of claims 13 or 15 to 18, **characterized in that** at least one of said anionic fluorinated surfactants is selected from the group consisting of:
- fluorinated carboxylic acids;
- fluorinated sulfonic acids;
- fluorinated organosulfuric acids;
- fluorinated phosphinic, phosphonic and organophosphoric acids; and
- anionic derivatives or salts thereof.

22. The aqueous colloidal dispersion according to claim 21, **characterized in that** the anionic fluorinated surfactant is selected from the group consisting of:
- perfluorocarboxylic acids and salts thereof;
- perfluorosulfonic acids and salts thereof;
- fluorinated esters thereof.

23. The aqueous colloidal dispersion according to any of claims 14, 19 or 20, **characterized in that** at least one of said cationic fluorinated surfactants is selected from fluorinated amines and salts thereof.

24. A process for the preparation of an aqueous colloidal dispersion according to any of claims 1 to 23 comprising the steps of:
forming a homogeneous mixture of one or more ionic fluorinated surfactants in water; and
slowly adding an aqueous solution of the polyelectrolyte or polyelectrolytes to the mixture with intensive mixing.

25. The process according to claim 24, **characterized in that** the pH value of the polyelectrolyte solution is adjusted for the polyelectrolyte to be at least partially neutralized in the solution.

26. The process according to claim 24 or 25, **characterized in that** the ratio of c_{P}/c_{T} of the equivalent charge concentration of the polyions in the polyelectrolyte solution employed, c_{P} , to that of the surfactant ions in the surfactant solution employed, c_{T} , is less than 1.2.

27. The process according to claim 26, **characterized in that** the ratio of the equivalent charge concentration of the polyions in the polyelectrolyte solution employed to that of the surfactant ions in the surfactant solution employed is less than 1.05.

28. The process according to claim 26, **characterized in that** the ratio of the equivalent charge concentration of the polyions in the polyelectrolyte solution employed to that of the surfactant ions in the surfactant solution employed is less than 1.

29. A coating method in which an aqueous colloidal dispersion according to any of claims 1 to 23 is applied to the surface to be coated, and dried.

30. The coating method according to claim 29 in which the coating, after initial drying, is again washed with water.

31. Use of an aqueous colloidal dispersion according to any of claims 1 to 23 for the coating of surfaces.

32. Use of an aqueous colloidal dispersion according to any of claims 1 to 23 for the coating of fibers or textiles.

33. Use of an aqueous colloidal dispersion according to any of claims 1 to 23 for the coating of leather.

34. Use of an aqueous colloidal dispersion according to any of claims 1 to 23 for the preparation of a coating which improves slip.

## Revendications

1. Dispersion colloïdale aqueuse contenant des polyions d'au moins un polyélectrolyte et des ions d'agent tensio-actif d'au moins un agent tensio-actif fluoré ionique ayant une charge opposée à la charge des polyions, dans laquelle lesdits polyions et au moins une partie des ions d'agent tensio-actif forment des complexes contenus dans les particules du colloïde, et le rapport stoechiométrique de la dispersion, basé sur la charge dudit polyion ou desdits polyions et dudit ou desdits ions d'agent tensio-actif, est compris entre 1:0,5 et 1:1,5.

2. Dispersion colloïdale aqueuse selon la revendication 1, **caractérisée en ce que** le rapport stoechiométrique de la dispersion, basé sur la charge dudit polyion et dudit ou desdits ions d'agent tensio-actif, est compris entre 1:0,8 et 1:1,1.

3. Dispersion colloïdale aqueuse selon la revendication 2, **caractérisée en ce que** le rapport stoechiométrique de la dispersion, basé sur la charge dudit polyion et dudit ou desdits ions d'agent tensio-actif, est compris entre 1:1 et 1:1,1.

4. Dispersion colloïdale aqueuse. selon la revendication 1, **caractérisée en ce que** le rapport stoechiométrique de la dispersion, basé sur la charge dudit polyion et dudit ou desdits ions d'agent tensio-actif, est compris entre 1:1 et 1:1,02.

5. Dispersion colloïdale aqueuse selon l'une quelconque des revendications 1 à 4, **caractérisée en ce que** la taille moyenne des particules de la dispersion est comprise dans la gamme de 50 nm à 800 nm.

6. Dispersion colloïdale aqueuse selon la revendication 5, **caractérisée en ce que** la taille moyenne des particules de la dispersion est comprise dans la gamme de 50 nm à 500 nm.

7. Dispersion colloïdale aqueuse selon l'une quelconque des revendications précédentes, **caractérisée en ce que** les particules du colloïde ont une structure mésomorphique.

8. Dispersion colloïdale aqueuse selon l'une quelconque des revendications précédentes, **caractérisée en ce que** la proportion pondérale des particules du colloïde dans la dispersion est comprise dans la gamme de 0,01 à 15%.

9. Dispersion colloïdale aqueuse selon la revendication 8, **caractérisée en ce que** la proportion pondérale des particules du colloïde dans la dispersion est comprise dans la gamme de 0,25 à 10%.

10. Dispersion colloïdale aqueuse selon l'une quelconque des revendications précédentes, **caractérisée en ce que** les particules du colloïde contiennent des polyions d'au moins deux polyélectrolytes divers.

11. Dispersion colloïdale aqueuse selon l'une quelconque des revendications 1 à 10, **caractérisée en ce qu'**elle contient au moins un second agent tensio-actif fluoré ionique.

12. Dispersion colloïdale aqueuse selon l'une quelconque des revendications 1 à 11, **caractérisée en ce qu'**au moins un des agents tensio-actifs fluorés ioniques est hétérodispersé.

13. Dispersion colloïdale aqueuse selon l'une quelconque des revendications 1 à 12, **caractérisée en ce que** les polyions sont des polycations et les ions d'agent tensio-actif sont des anions.

14. Dispersion colloïdale aqueuse selon l'une quelconque des revendications 1 à 12, **caractérisée en ce que** les polyions sont des polyanions et les ions d'agent tensio-actif sont des cations.

15. Dispersion colloïdale aqueuse selon la revendication 13, **caractérisée en ce que** le polyélectrolyte cationique ou les polyélectrolytes cationiques sont choisis dans le groupe des:
- polymères contenant au moins un motif monomère choisie parmi les monomères à insaturation éthylénique comportant des groupements azotés;
- polyéthylèneimine et polyéthylèneimines à substituants alkyle;
- ionènes; et
- polysaccharides contenant des groupements cationiques.

16. Dispersion colloïdale aqueuse selon la revendication 13, **caractérisée en ce que** le polyélectrolyte cationique ou les polyélectrolytes cationiques contiennent au moins un motif monomère comportant un groupement ammonium quaternaire ou un groupement hétéroaromatique N-substitué.

17. Dispersion colloïdale aqueuse selon la revendication 14 ou 15, **caractérisée en ce que** le polyélectrolyte cationique contient en outre des motifs monomères non-ioniques.

18. Dispersion colloïdale aqueuse selon l'une quelconque des revendications 15 ou 17, **caractérisée en ce que** le polyélectrolyte contient un copolymère sels de dialcényldialkylammonium et de monomères non-ioniques.

19. Dispersion colloïdale aqueuse selon la revendication 14, **caractérisée en ce que** le polyélectrolyte anionique est choisi dans le groupe des:
- polymères contenant au moins un motif monomère choisi parmi les acides carboxyliques à insaturation éthylénique et leurs sels et dérivés, des motifs monomères à insaturation éthylénique contenant des groupements acide sulfonique, ou des motifs monomères à insaturation éthylénique contenant des groupements acide phosphinique, phosphonique ou phosphorique; et
- polysaccharides anioniques.

20. Dispersion colloïdale aqueuse selon la revendication 19, **caractérisée en ce que** le polyélectrolyte anionique contient en outre des motifs monomères non-ioniques.

21. Dispersion colloïdale aqueuse selon l'une quelconque des revendications 13 ou 15 à 18, **caractérisée en ce qu'**au moins un des agents tensio-actifs fluorés ioniques est choisi dans le groupe des:
- acides carboxyliques fluorés;
- acides sulfoniques fluorés;
- acides organosulfuriques fluorés;
- acides phosphiniques, phosphoniques et organophosphoriques fluorés;
- dérivés anioniques ou leurs sels.

22. Dispersion colloïdale aqueuse selon la revendication 21, **caractérisée en ce que** ledit agent tensio-actif fluoré anionique est choisi dans le groupe des:
- acides carboxyliques perfluorés et leurs sels;
- acides sulfoniques perfluorés et leurs sels;
- leurs esters fluorés.

23. Dispersion colloïdale aqueuse selon l'une quelconque des revendications 14, 19 ou 20, **caractérisée en ce qu'**au moins un des agents tensio-actifs fluorés cationiques est choisi parmi les amines fluorées et leurs sels.

24. Procédé pour la préparation d'une dispersion colloïdale aqueuse selon l'une quelconque des revendications 1 à 23, comportant les étapes dans lesquelles:
- on forme un mélange homogène d'un ou plusieurs agents tensio-actifs fluorés ioniques dans de l'eau; et
- on ajoute lentement une solution aqueuse dudit ou desdits polyélectrolytes dans le mélange en brassant vigoureusement.

25. Procédé selon la revendication 24, **caractérisé en ce que** la valeur du pH de ladite solution de polyélectrolyte est ajustée de telle manière que le polyélectrolyte est au moins partiellement neutralisé dans la solution.

26. Procédé selon la revendication 24 ou 25, **caractérisé en ce que** le rapport c_{P}/c_{T} de la concentration de charges équivalente des polyions dans la solution de polyélectrolyte mise en oeuvre, c_{P}, à celle des ions d'agent tensio-actif dans la solution d'agent tensio-actif mise en oeuvre, c_{T}, vaut moins de 1,2.

27. Procédé selon la revendication 26, **caractérisé en ce que** le rapport de la concentration de charges équivalente des polyions dans la solution de polyélectrolyte mise en oeuvre à celle des ions d'agent tensio-actif dans la solution d'agent tensio-actif mise en oeuvre vaut moins de 1,05.

28. Procédé selon la revendication 26, **caractérisé en ce que** le rapport de la concentration de charges équivalente des polyions dans la solution de polyélectrolyte mise en oeuvre à celle des ions d'agent tensio-actif dans la solution d'agent tensio-actif mise en oeuvre vaut moins de 1.

29. Procédé de revêtement dans lequel une dispersion colloïdale aqueuse selon l'une quelconque des revendications 1 à 23 est étalée sur la surface qui doit être revêtue, et puis séchée.

30. Procédé de revêtement selon la revendication 29 dans lequel le revêtement, après avoir commencé de sécher, est encore une fois lavé avec de l'eau.

31. Utilisation d'une dispersion colloïdale aqueuse selon l'une quelconque des revendications 1 à 23 pour le revêtement de surfaces.

32. Utilisation d'une dispersion colloïdale aqueuse selon l'une quelconque des revendications 1 à 23 pour le revêtement de fibres et de textiles.

33. Utilisation d'une dispersion colloïdale aqueuse selon l'une quelconque des revendications 1 à 23 pour le revêtement de cuir.

34. Utilisation d'une dispersion colloïdale aqueuse selon l'une quelconque des revendications 1 à 23 pour la préparation d'un revêtement qui réduit la friction.
